# EUROPEAN PATENT APPLICATION

(11) **EP 1 597 956 A1**
(43) Date of publication of application: **23.11.2005**
(21) Application number: 05250237.4
(22) Date of filing: 18.01.2005
(51) Int. Cl.: A01D 34/47

(54) **Walk behind mower with clutch**

(30) Priority: 21.05.2004 US 851991
(71) Applicant: TEXTRON INC., Providence, Rhode Island 02903 (US)
(72) Inventor: Derby V, Harry L., Charlotte, NC 28210 (US)
(74) Representative: Moir, Michael Christopher

(57) **Abstract**

A walk-behind greens mower (10) having a mobile structure and a ground engaging traction member (36) rotatably coupled to the mobile structure for imparting traction movement to the mobile structure for movement on the ground. An internal combustion engine (32) is supported on the mobile structure and outputs a driving force at an output shaft (48). A bed knife is supported by the mobile structure having a cutting edge that cooperates with a grass cutting reel (18) rotatably supported on the mobile structure. The grass cutting reel includes cutting blades (20) being in grass cutting relationship with the bed knife. A drive system (38) is operably coupled between the output shaft (48) and at least one of the ground engaging traction member (36) and the grass cutting reel (18) for transmitting the driving force thereto. The drive system (38) includes a centrifugal clutch (60) operably coupled with the output shaft (48). The centrifugal clutch (60) prevents the driving force from being transmitted to the ground engaging traction member (36) or grass cutting reel (18) until a predetermined rotational speed of output shaft (48) is achieved, thereby eliminating the need for complicated engagement systems.

## Description

### FIELD OF THE INVENTION

The present invention relates to mowers and, more particularly, relates to a greens mower having a centrifugal clutch operably engaging a traction drive for improved performance and simplified construction.

### BACKGROUND OF THE INVENTION

As is known in the prior art, greens mowers are particularly useful in mowing golf course or lawn bowling greens, which are known to require exacting mowing results to assure that the grass is cut consistently throughout the green. Traditionally, these greens mowers are either walk-behind type mowers or riding mowers.

Greens mowers generally employ a reel type mowing unit as opposed to a rotary type mowing unit. Because of the time required to grow a mature green and the cost associated with therewith, it is extremely important that greens mowers operate properly and not damage the turf.

Golf course greens maintenance equipment traditionally has utilized internal combustion engines. A number of greens mowers are known in the art. Some are discussed in U.S. Patent Nos. 3,429,110, and 4,024,996. Riding greens mowers with multiple or gang mowing units are the subject of U.S. Patent Nos. 3,511,033, 3,668,844, 4,866,918, and 5,042,236. All of the recited patents referenced above are incorporated herein by reference. The mowers discussed in these patents all rely on an internal combustion engine as the primary source of power and a drive mechanism of drive belts, gears, and/or chains or a hydrostatic system for supplying power to the ground engaging wheels and additionally to the reel mowing units. However, there are a number of disadvantages associated with the use of a greens mower employing an internal combustion engine to power both the drive mechanism and the mowing unit.

Such conventional greens mowers often employ disengagement systems that the operator is required to actuate in order to engage and disengage the mowing unit and/or drive system. These systems often require the operator to actuate a lever separate from the handle, which may lead to undesirable cutting performance as the mowing unit is being engaged/disengaged and stopped/started. That is, conventional greens mowers often require the operator to control both the engine throttle and each of the drive system and mowing unit. However, such arrangement often prevents an operator from slowly engaging a drive system or mowing unit and increases the difficulty of controlling the greens mower.

Accordingly, there exists a need in the relevant art to provide a greens mower that is capable of simplifying the operation thereof to permit the gradual application of drive power and/or cutting power. Additionally, there is a need in the relevant art to provide a greens mower that overcomes the disadvantages of the prior art.

### SUMMARY OF THE INVENTION

An aspect of the present invention is defined in claim 1. Preferred features of this aspect are defined in the dependent claims.

According to preferred embodiments of the present invention, a walk-behind greens mower having an advantageous construction is provided. The walk-behind greens mower includes a mobile structure and a ground engaging traction member rotatably coupled to the mobile structure for imparting traction movement to the mobile structure for movement on the ground. An internal combustion engine is supported on the mobile structure and outputs a driving force at an output shaft. A bed knife is supported by the mobile structure having a cutting edge that cooperates with a grass cutting reel rotatably supported on the mobile structure. The grass cutting reel includes cutting blades being in grass cutting relationship with the bed knife. A drive system is operably coupled between the output shaft and at least one of the ground engaging traction member and the grass cutting reel for transmitting the driving force thereto. The drive system includes a centrifugal clutch operably coupled with the output shaft. The centrifugal clutch prevents the driving force from being transmitted to the ground engaging traction member or grass cutting reel until a predetermined rotational speed of output shaft is achieved, thereby eliminating the need for complicated engagement systems.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

According to another aspect of the present invention there is provided a greens mower comprising: a walk-behind mobile structure; a motor mounted on said mobile structure, said motor having a rotatable output shaft supplying a driving force; a driven member; a clutch member operably coupled between said output shaft and said driven member for selectively transmitting said driving force to said driven member when said output shaft reaches a predetermined rotational speed, said clutch member preventing said driving force from being transmitted to said driven member at a power setting below said predetermined power setting.

According to another aspect of the present invention there is provided a walk-behind greens mower comprising: a mobile structure; a ground engaging traction member rotatably coupled to said mobile structure, said ground engaging traction member imparting traction movement to said mobile structure for movement on the ground; an internal combustion engine supported on said mobile structure, said internal combustion engine outputting a driving force at an output shaft; a grass cutting reel assembly rotatably supported on said mobile structure, said grass cutting reel having cutting blades being in grass cutting relationship with a bed knife; and a centrifugal clutch operably coupled between said output shaft and at least one of said ground engaging traction member and said grass cutting reel for transmitting said driving force thereto, said centrifugal clutch preventing said driving force from being transmitted to said at least one of said ground engaging traction member and said grass cutting reel until a predetermined rotational speed of said output shaft is achieved.

According to another aspect of the present invention there is provided a walk-behind greens mower comprising: a mobile structure; a ground engaging traction member rotatably coupled to said mobile structure, said ground engaging traction member imparting traction movement to said mobile structure for movement on the ground; an internal combustion engine supported on said mobile structure, said internal combustion engine outputting a driving force at an output shaft; a grass cutting reel assembly rotatably supported on said mobile structure, said grass cutting reel having cutting blades being in grass cutting relationship with a bed knife; and a drive system operably coupled between said output shaft and at least one of said ground engaging traction member and said grass cutting reel for selectively transmitting said driving force thereto when said output shaft reaches a predetermined rotational speed, said drive system preventing said driving force from being transmitted to said one of said ground engaging traction member and said grass cutting reel at a power setting below said predetermined power setting.

### BRIEF DESCRIPTION OF THE DRAWINGS

The present invention will become more fully understood from the detailed description and the accompanying drawings, wherein:
FIG. 1 is a perspective view illustrating a greens mower according to the principles of the present invention; and

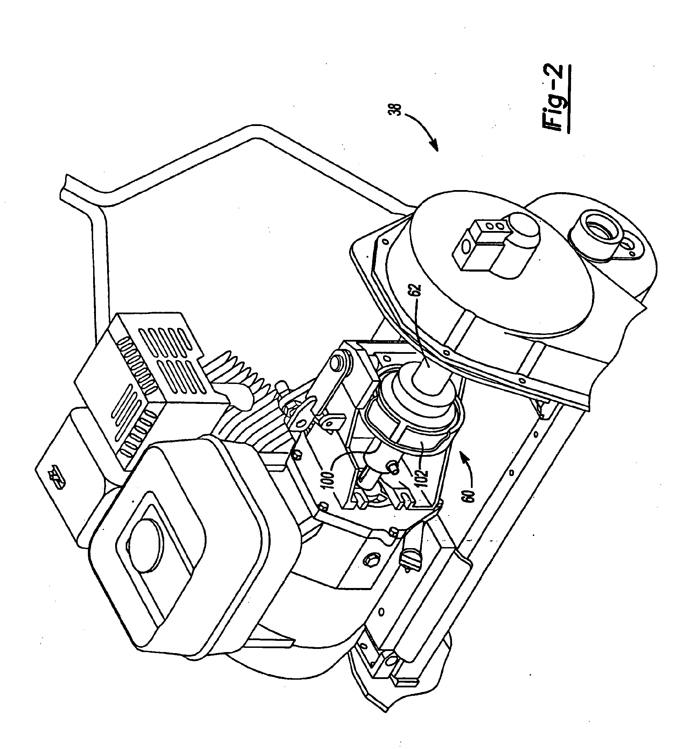

FIG. 2 is an enlarged perspective view illustrating the drive system of the greens mower.

### DETAILED DESCRIPTION OF THE PREFERRED EMBODIMENT

The following description of the preferred embodiment is merely exemplary in nature and is in no way intended to limit the invention, its application, or uses. For example, the present invention may find utility in a wide variety of applications, including use in lawn mowers, roto-tillers, aerators, snowblowers, and the like. However, in the following description, the present invention will be described in connection with a greens mower. Such description should not be regarded as limiting the present invention.

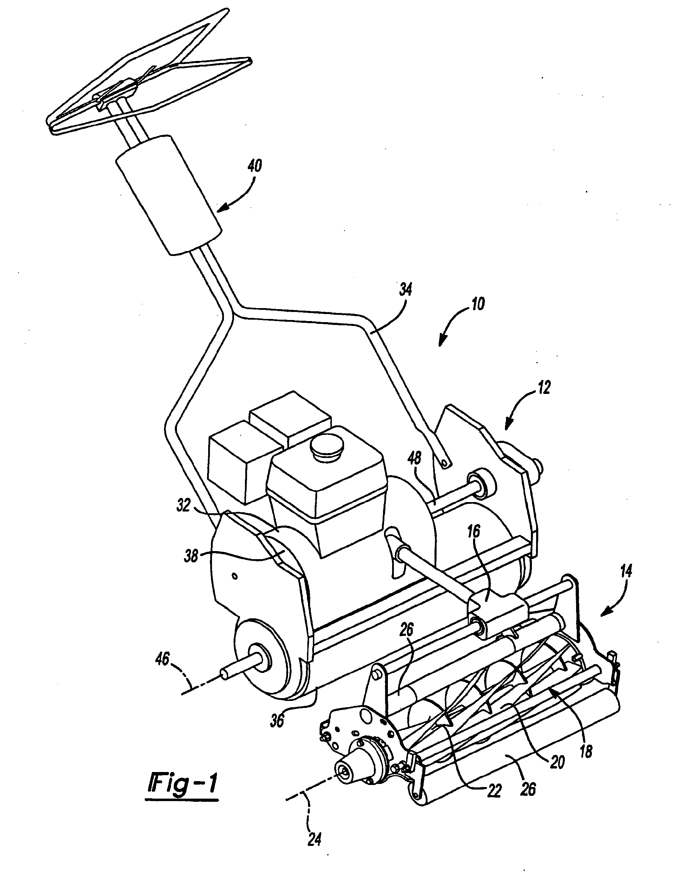

With reference to the figure, FIG. 1 illustrates a greens mower 10 incorporating the principles of the present invention. Greens mower 10 is a reel-type mower having a base portion 12 and a mowing unit 14. Mowing unit 14 is preferably articulately-coupled to base portion 12 through a pivoting mechanism 16; however, alternative connections may be used.

Mowing unit 14 includes a rotatable greens mower reel 18 having spiraled blades 20 equally spaced around a reel shaft 22. Reel shaft 22 is generally elongated and defines a rotation axis 24 extending along the length of reel shaft 22. A conventional fixed bed knife (not shown) is operably mounted to mowing unit 14. Blades 20 orbit relative to shaft 22 and move past the fixed bed knife for the usual and well-known function of cutting the grass. Mowing unit 14 further includes a pair of ground engaging rollers 26 rotatably mounted along a forward and rearward portion of mowing unit 14. The pair of ground engaging rollers 26 serve to support mowing unit 14 for movement on the ground. The pair of ground engaging rollers 26 are preferably adjustable to define a cutting height.

Base portion 12 generally includes an internal combustion engine 32, a frame 34, a lawn roller 36, a drive system 38, and a handle assembly 40. Internal combustion engine 32 is of conventional design and is mounted on frame 34. Internal combustion engine 32 may include an electric starter for improved convenience.

Lawn roller 36 is rotatably mounted to frame 34 through a roller axle 46. Lawn roller 36 supports base portion 12 on the ground and serves as the traction drive for greens mower 10. However, other ground-supporting traction members may be substituted. Drive system 38 is operably coupled between an output shaft 48 of internal combustion engine 32 and lawn roller 36.

Drive system 38 generally includes a centrifugal clutch member 60 operably coupled between output shaft 48 of internal combustion engine 32 and a driven shaft 62 of drive system 38. Driven shaft 62 is further coupled with additional drive train members for transferring motive force to lawn roller 36 or to mowing unit 14. Such additional drive train members may include an idler pulley (not shown) mounted to lawn roller 36 for rotation therewith and a drive pulley (not shown) mounted to driven shaft 62. A drive belt (not shown) may extend between the drive pulley and the idler pulley to transfer drive force from internal combustion engine 32 to lawn roller 36. Thus, there exists a traction drive train from internal combustion engine 32 to the ground-engaging lawn roller 36 capable of driving greens mower 10 in at least a forward direction.

Centrifugal clutch 60 preferably includes an outer drum 100 and a rotor 102 inside drum 100. Rotor 102 constitutes the driving member of the clutch, which is coupled to output shaft 48 of internal combustion engine 32, and outer drum 100 constitutes the driven member, which is coupled to driven shaft 62 of drive system 38. Rotor 102 usually comprises a hub or body portion, at least two weights separate from and movably mounted on the body portion, and one or more springs for holding the weights out of engagement with outer drum 100 when rotor 102 is stationary or is rotating at a speed below a selected critical speed. When the speed of rotation of rotor 102 is increased to a critical value, the weights are moved outwardly by centrifugal force against the action of the spring means so as to engage outer drum 100 and thereby provide a driving connection between outer drum 100 and rotor 102.

Handle assembly 40 includes a handle 50 suitably connected with frame 34. Handle 50 includes a grip portion 52 which the operator can hold in steering greens mower 10. A movably mounted bail or operator hand control 54 is pivotally connected to handle 50 and is movable toward and away from the grip portion 52. The operation of hand control 54 may be similar to that disclosed in commonly owned U.S. Patent No. 6,523,334, which is incorporated herein by reference. In this arrangement, the operator can hold both handle 50 and hand control 54 while guiding greens mower 10. Upon release of hand control 54, drive system 38 is interrupted in a manner similar to that disclosed in the '334 Patent.

Handle assembly 40 further includes an engine throttle control 64 for controlling the engine speed of internal combustion engine 32. Engine throttle control 64 is coupled to internal combustion engine 32 via a cable 66 so as to drive a throttle lever (not shown) of internal combustion engine 32. It should be understood that actuation of engine throttle control 64 directly controls the rotational speed of output shaft 48. Once the critical rotational speed of output shaft 48 is achieved centrifugal clutch 60 automatically couples output shaft 48 of internal combustion engine 32 and driven shaft 62 of drive system 38, thereby transmitting driving force through drive system 38 to either lawn roller 36 or mowing unit 14.

As should be appreciated from the discussion above, the present invention provides a number of advantages over the prior art. Particularly, the present invention provides an internal combustion powered greens mowers that is capable of consistently maintaining a desired clip rate that is both reliable and easily configurable. Additionally, the present invention provides an internal combustion powered greens mowers that can operably drive an articulating mowing unit without the need for complex mechanical drive systems. Still further, the present invention provides a greens mower having a simple and safe disengagement system to permit the quick and convenient turning on and off of the mowing unit.

While the present invention has been described in its preferred embodiments, it is to be understood that the words which have been used are words of description rather than limitation and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

A walk-behind greens mower having a mobile structure and a ground engaging traction member rotatably coupled to the mobile structure for imparting traction movement to the mobile structure for movement on the ground. An internal combustion engine is supported on the mobile structure and outputs a driving force at an output shaft. A bed knife is supported by the mobile structure having a cutting edge that cooperates with a grass cutting reel rotatably supported on the mobile structure. The grass cutting reel includes cutting blades being in grass cutting relationship with the bed knife. A drive system is operably coupled between the output shaft and at least one of the ground engaging traction member and the grass cutting reel for transmitting the driving force thereto. The drive system includes a centrifugal clutch operably coupled with the output shaft. The centrifugal clutch prevents the driving force from being transmitted to the ground engaging traction member or grass cutting reel until a predetermined rotational speed of output shaft is achieved, thereby eliminating the need for complicated engagement systems.

## Claims

1. A mower comprising:
a walk-behind mobile structure;
a motor mounted on said mobile structure, said motor having a rotatable output shaft supplying a driving force;
a driven member; and
a clutch member operably coupled between said output shaft and said driven member for selectively transmitting said driving force to said driven member when a predetermined rotational speed of said output shaft is reached, and for preventing said driving force from being transmitted to said driven member when the rotational speed of the output shaft is less than the predetermined rotational speed.

2. The mower according to Claim 1 wherein said clutch member is a centrifugal clutch.

3. The mower according to Claim 1 or 2 wherein said driven member comprises:
a ground engaging traction member rotatably coupled to said mobile structure, said ground engaging traction member imparting traction movement to said mobile structure for movement on the ground.

4. The mower according to Claim 1 or 2 wherein said driven member comprises:
a grass cutting reel assembly rotatably supported on said mobile structure, said grass cutting reel having cutting blades being in grass cutting relationship with a bed knife.

5. The mower of Claim 1 or 2 comprising a second driven member, wherein said driven member comprises a ground engaging traction member rotatably coupled to said mobile structure, said ground engaging traction member imparting traction movement to said mobile structure for movement on the ground, and said second driven member comprises a grass cutting reel assembly rotatably supported on said mobile structure, said grass cutting reel having cutting blades being in grass cutting relationship with a bed knife, and wherein said clutch member is operably coupled between said output shaft and at least one of said driven member and said second driven member for transmitting said driving force thereto.

6. The mower of Claim 5 comprising a drive system operably coupled between said output shaft and at least one of said ground engaging traction member and said grass cutting reel, said drive system comprising said clutch member.

7. The mower of any preceding claim wherein the motor comprises an internal combustion engine.

8. The mower of any preceding claim being a greens mower.
